## Europäisches Patentamt

## European Patent Office

## Office européen des brevets

(11) Numéro de publication: **0 173 027**
**B1**

(12) **FASCICULE DE BREVET EUROPÉEN**

(45) Date de publication du fascicule du brevet:
14.12.88

(21) Numéro de dépôt: **85108109.1**

(22) Date de dépôt: **29.06.85**

(51) Int. Cl.⁴: **F 16 L 37/14,** F 28 F 9/00,
F 28 D 7/16

(54) **Assemblage étanche entre tube, coude tubulaire et bride métalliques pour installation thermoélectrique.**

(30) Priorité: **27.06.84 FR 8413330**

(43) Date de publication de la demande:
**05.03.86 Bulletin 86/10**

(45) Mention de la délivrance du brevet:
**14.12.88 Bulletin 88/50**

(84) Etats contractants désignés:
**CH DE GB IT LI NL SE**

(56) Documents cité:
**EP-A-0 119 502**
**FR-A-2 142 147**
**FR-A-2 394 317**
**GB-A-3 551**
**GB-A-745 526**

(73) Titulaire: **TUNZINI NESSI ENTREPRISES
D'EQUIPEMENTS, 250, Route de l'Empereur,
F-92508 Rueil Malmaison (FR)**

(72) Inventeur: **Huard, Jean- François, 1 Pré Hayer,
F-54700 Pont a Mousson (FR)**

(74) Mandataire: **Puit, Thierry, Centre de Recherches
de Pont- à- Mousson Service de Propriété
Industrielle Boîte Postale 109, F-54704 Pont- à-
Mousson Cédex (FR)**

## Description

La présente invention est relative à un assemblage étanche entre tube, coude tubulaire et bride métalliques pour une installation thermoélectrique destinée à travailler soit en pompe à chaleur, soit en générateur d'électricité.

Une installation thermoélectrique comporte deux circuits fluides (un chaud et un froid) entre lesquels sont placés les éléments thermoélectriques, l'un au moins de ces circuits étant un circuit liquide utilisant des conduits tubulaires parallèles assemblés en faisceau.

Suivant une technique connue d'après EP-A-0 119 502, des thermoéléments sont en contact avec des échangeurs tubulaires en nappes alternatives de circulation d'un fluide chaud et d'un fluide froid et sont empilés pour former des colonnes, elles-mêmes assemblées pour former un tiroir.

L'invention vise à réaliser un assemblage étanche par coude tubulaire d'une part aux extrémités des tubes d'une même nappe d'échangeur à fluide chaud ou à fluide froid, et d'autre part entre des nappes différentes de fluide à même température, c'est-à-dire entre deux nappes de fluide chaud ou entre deux nappes de fluide froid.

Le problème de raccordement des coudes et des autres liaisons entre nappes d'échangeur, est difficile à résoudre.

Il peut être résolu par brasure ou soudure des coudes sur les extrémités des tubes échangeurs de la batterie.

Mais la liaison par brasure ou soudure suppose que cette opération de soudure ou de brasure soit possible avec les matériaux (métaux des tubes et des coudes) et que le matériau d'apport (brasure) soit acceptable pour les conditions d'utilisation (stabilité, corrosion par le fluide, toxicité....). La soudure autogène est parfois requise pour certains métaux comme les inox. Dans l'un et l'autre cas, cette liaison est une opération délicate car la batterie d'échangeurs est un ensemble compact et les tubes échangeurs sont placés à la distance minimale possible. Il y a donc fort peu de place pour réaliser la brasure ou la soudure qui doit être parfaitement étanche sur toute la périphérie d'une section tubulaire. De plus, le chauffage des pièces tubulaires qui est indispensable à l'opération risque de détériorer certaines parties constitutives de la batterie thermoélectrique qui sont sensibles à la chaleur, celle-ci étant transmise par conduction le long des tubes échangeurs.

Il a été proposé de réaliser par brasure les liaisons d'une même nappe sur une contrebride fixée par vis ou boulons sur la bride. Outre le fait qu'il faut toujours réaliser par ailleurs les éventuelles liaisons entre nappes de même nature (froides ou chaudes) après la mise en place des contrebrides, il faut pouvoir disposer les vis et boulons à des emplacements accessibles pour le serrage, ce qui est très difficile sous les coudes de liaison dans une même nappe. Un autre inconvénient réside dans la tendance au voilage que présentent les contrebrides où sont brasées les liaisons hydrauliques, ce qui peut nécessiter une rectification de la surface d'appui pour obtenir l'étanchéité des circuits. Cette rectification nécessite de toute façon la présence d'un joint d'étanchéité torique placé dans un logement situé soit sur la bride, soit sur la contrebride.

Conformément à l'invention, le problème est résolu par une liaison mécanique entre la batterie de tubes et les coudes d'extrémité des tubes échangeurs de cette batterie.

L'invention a donc pour objet un assemblage étanche entre un tube, un coude tubulaire et une bride métalliques pour une installation thermoélectrique du type comportant une pluralité de thermoéléments coopérant avec des échangeurs de chaleur disposés autour de tubes en nappes superposées, parcourues par des fluides alternativement chaud et froid et dont au moins un des fluides est un liquide qui est véhiculé par un conduit tubulaire continu coopérant thermiquement avec les thermoéléments, lesdits conduits tubulaires ou tubes étant assemblés en nappes alternativement pour fluide chaud et pour fluide froid par des brides près des extrémités desdits tubes qui traversent les brides, cet assemblage étant caractérisé en ce que, entre chaque tube et une bride métallique est interposée une collerette métallique d'assemblage avec un coude tubulaire de liaison avec un autre tube, ledit tube étant emmanché de manière étanche dans la collerette qu'il traverse au fins en partie, et dans l'extrémité dudit coude cependant que la collerette emboîtée dans un lamage cylindrique de la bride est verrouillée mécaniquement sur la bride dans le lamage par une paire de chevilles droites et parallèles traversant la bride de part en part, et à moitié encastrées sur la périphérie de la collerette qui est ainsi bloquée en translation et en rotation par rapport à la bride.

Grâce à l'invention, l'étanchéité est assurée entre les tubes échangeurs et les pièces de raccordement coudées.

De plus, les inconvénients précités de la soudure ou de la brasure sont supprimés et il est possible de mettre en place rapidement tous les types de liaisons hydrauliques nécessaires à la batterie entrées et sorties des fluides, coudes à l'intérieur d'une même nappe, et coudes de liaison entre nappes de même nature.

Cette invention permet également un démontage aisé et rapide des liaisons hydrauliques par exemple pour le changement de joints défectueux ou pour le nettoyage des tubes échangeurs.

D'autres caractéristiques et avantages apparaîtront au cours de la description qui va suivre.

Au dessin annexé donné uniquement à titre d'exemple,

la Fig. 1 est une vue en plan et en coupe, suivant l'axe des tubes, d'assemblages étanches de l'invention utilisés sur une nappe d'échangeurs de batterie,

la Fig. 2 est une vue en bout des liaisons hydrauliques de la Fig. 1, sur une même nappe et de la bride d'assemblage des tubes échangeurs de la nappe de la Fig. 1,

la Fig. 3 est une coupe longitudinale d'une collerette utilisée pour l'assemblage étanche de l'invention entre une bride, un tube échangeur et un coude de la Fig. 1,

la Fig. 4 est une vue en coupe transversale de la collerette, suivant la ligne 4 - 4 de la Fig. 3,

la Fig. 5 est une vue en coupe transversale analogue à la Fig. 4 d'une variante de collerette pour assemblage suivant l'invention,

la Fig. 6 est une vue schématique partielle, simplifiée, en perspective, d'une batterie thermoélectrique comportant trois nappes de tubes, montrant la disposition des liaisons hydrauliques au moyen des assemblages de l'invention,

la Fig. 7 est une vue en bout, analogue à la Fig. 2, d'une variante de liaisons hydrauliques pour assemblages de l'invention, une bride d'extrémité d'une nappe étant vue de face,

la Fig. 8 est une vue schématique partielle en coupe suivant la ligne 8 - 8 de la Fig. 7.

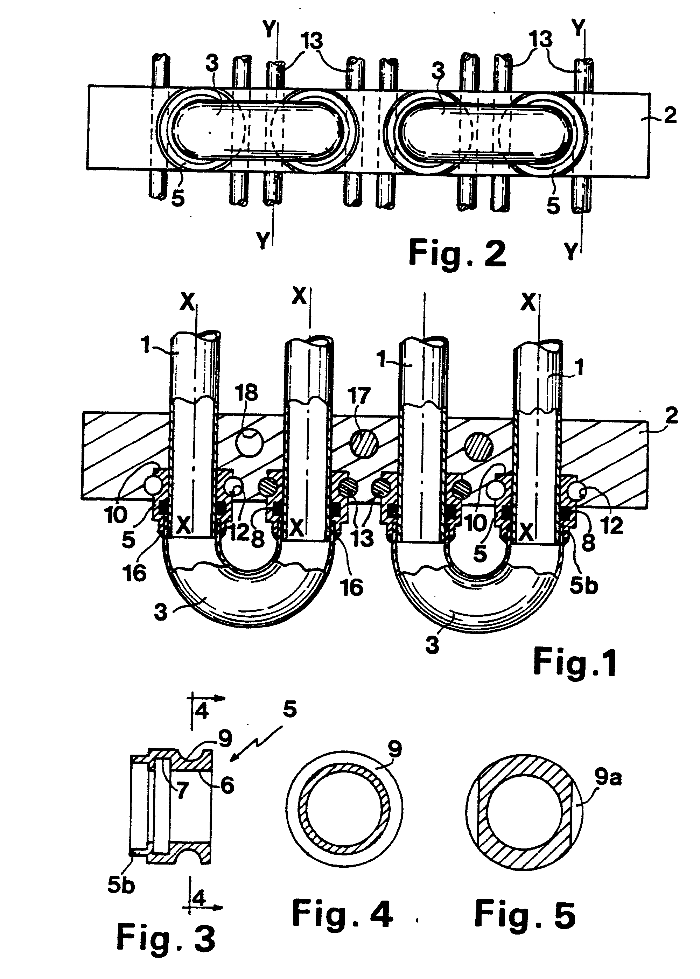

Suivant l'exemple d'exécution représenté aux Fig. 1 à 6 un assemblage suivant l'invention s'applique à une batterie thermoélectrique composée d'un faisceau tubulaire de nappes A de tubes chauds et de nappes B de tubes froids. Les nappes A et B sont superposées et alternées.

Chaque nappe comporte des tubes échangeurs 1 parallèles entre eux, d'axe XX, réunis par des brides d'extrémité 2.

Sur une même nappe A ou B (Fig. 1 - 2), deux tubes 1 consécutifs sont à réunir à leurs extrémités par des coudes tubulaires 3 qui doivent eux-mêmes être assemblés, conformément à l'invention, à la bride 2 et aux tubes 1. Ces assemblages sont également appelés "liaisons hydrauliques" dans le cours de la description.

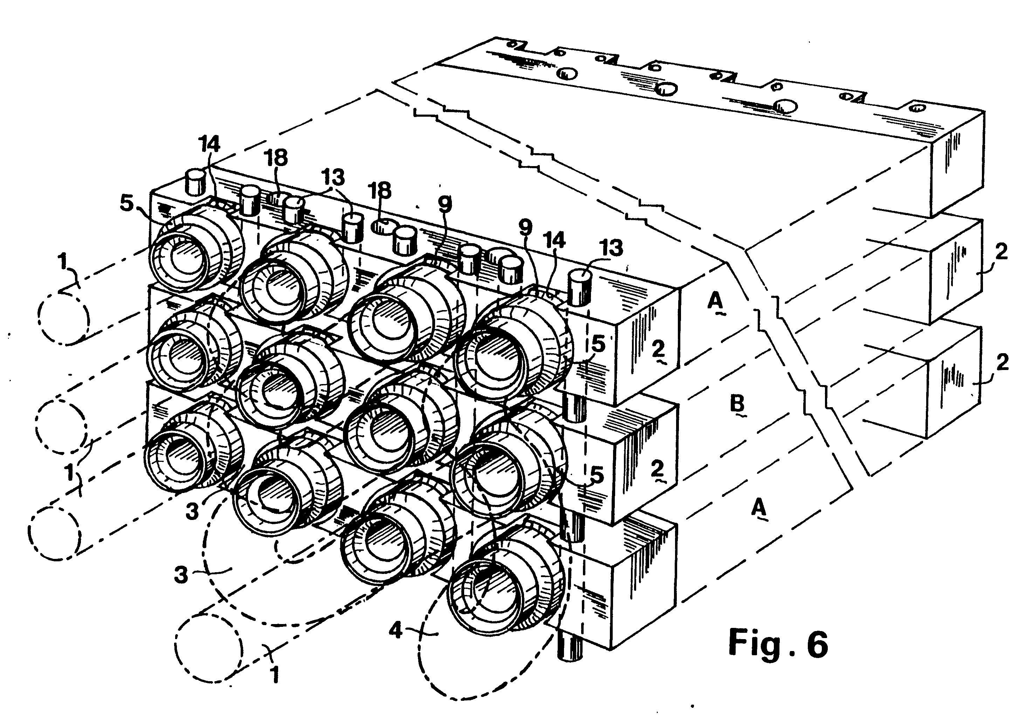

L'assemblage de l'invention s'applique également à des raccords tubulaires en forme de S (multicoudes) 4 reliant deux tubes d'extrémité de deux nappes consécutives de même nature, par exemple A, ces tubes étant situés à deux niveaux différents séparés par une nappe B. Les coudes 3 et un multicoude 4 sont représentés en trait interrompu à la Fig. 6. Comme on le voit, un raccord S multicoude 4 est destiné à contourner un tube échangeur 1 d'une nappe intermédiaire B, ce tube 1 étant relié à un coude 3 ou à un autre multicoude 4.

L'assemblage de l'invention à liaison mécanique entre un coude 3 ou un multicoude 4 et deux tubes échangeurs 1 et une bride 2 est réalisé de la manière suivante (Fig. 1 à 4).

L'assemblage comporte une collerette en métal 5 à solidariser avec un coude 3 ou un multicoude 4 ainsi qu'avec une bride 2.

Les collerettes 5 comportent dans leur alésage 6 une gorge intérieure 7 destinée à recevoir un joint d'étanchéité torique 8 qui assure l'étanchéité du circuit par compression autour du tube 1 de la batterie thermoélectrique, ledit tube 1 dépassant de la bride 2 qui assure la solidarité des tubes 1 d'une même nappe A ou B. Il est rappelé que chaque tube 1 porte un certain nombre d'éléments échangeurs de chaleur, de type connu mais non représentés ici.

Les collerettes 5 pénètrent dans des lamages circulaires ou cylindriques 10 adaptés aux collerettes 5 et ménagés dans la face extérieure des brides 2. Les lamages 10 sont concentriques aux tubes 1. Ils admettent donc, comme les collerettes 5, les mêmes axes parallèles XX.

Chaque collerette 5 présente à l'extérieur une gorge extérieure 9 dont le profil est sensiblement celui d'un demi-cercle (Fig. 3). Cette gorge extérieure 9 peut soit occuper toute la périphérie ou le pourtour circulaire de la collerette 5 (Fig. 4) soit une portion de celle-ci cette portion comporte alors deux rainures 9a diamétralement opposées, de section semi-circulaire correspondant d'une part à celle des perçages droits 12 qu'elles complètent et d'autre part à celle de chevilles 13. Les perçages droits 12 et les chevilles 13 sont décrits ci-après. Les deux rainures 9a sont parallèles entre elles (Fig. 5). Les rainures 9a sont donc les intersections de cylindres avec les collerettes 5. Chaque gorge extérieure 9 ou 9a est destinée à former un conduit de section circulaire en combinaison avec des perçages droits 12 d'axes YY orthogonaux aux axes XX et perpendiculaires au plan des axes XX. Les perçages 12 traversent la bride 2 et présentent une intersection de profil semi-circulaire dans le plan des axes XX, avec les lamages cylindriques 10 de la bride 2 de telle sorte que des chevilles 13 de section circulaire enfoncées dans les perçages 12 de la bride 2 viennent bloquer les collerettes 5 dont la gorge semi-circulaire 9 ou 9a complète les perçages 12 des brides 2 débouchant à hauteur des lamages 10. Ainsi sont solidarisées mécaniquement et de manière amovible, ou verrouillées, les collerettes 5 et la bride 2.

Sur la Fig. 6, la partie active comprenant les tubes 1 portant les échangeurs thermiques et les éléments thermoélectriques n'est représentée que par son encombrement en pointillé entre les brides 2 des extrémités des nappes A et B. La batterie présentée comporte seulement trois nappes de tubes 1, deux nappes A d'une sorte, par exemple des tubes 1 du circuit froid, et une nappe de tubes B de l'autre sorte, par exemple le circuit chaud. Ceci constitue la plus petite unité qui permet de visualiser les différentes liaisons hydrauliques entre tubes 1. Il est évident qu'une batterie comportant un nombre de nappes A, B plus élevé utilisera les mêmes éléments de liaisons hydrauliques (3, 4).

La Fig. 6 présente la face de la batterie où sont regroupées les entrées-sorties des deux liquides chaud-froid et les liaisons 3 et 4 (ici unique) entre les nappes A de même nature. Pour des raisons de clarté du dessin, les coudes 3 et multicoudes 4 de raccordement qui constituent lesdites liaisons hydrauliques ont été figurés en pointillé. Les liaisons hydrauliques de la face opposée n'ont pas été dessinées. Elles sont toutes constituées de coudes simples 3 à l'intérieur d'une même nappe A ou B.

Pour cet exemple d'exécution illustré par les Fig. 1 à 6, on remarque que les collerettes 5 ont un diamètre extérieur sensiblement égal à la hauteur de la bride 2 ce qui explique que les lamages 10, qui entaillent celle-ci et doivent avoir un diamètre un peu supérieur à celui des collerettes 5, produisent sur les faces supérieure et inférieure de la bride 2 des ouvertures rectangulaires 14 dont l'un des côtés est égal à la profondeur des lamages 10.

Cette disposition a été retenue pour conserver à la batterie thermoélectrique le maximum de compacité qui est souvent un paramètre très intéressant pour les applications pratiques.

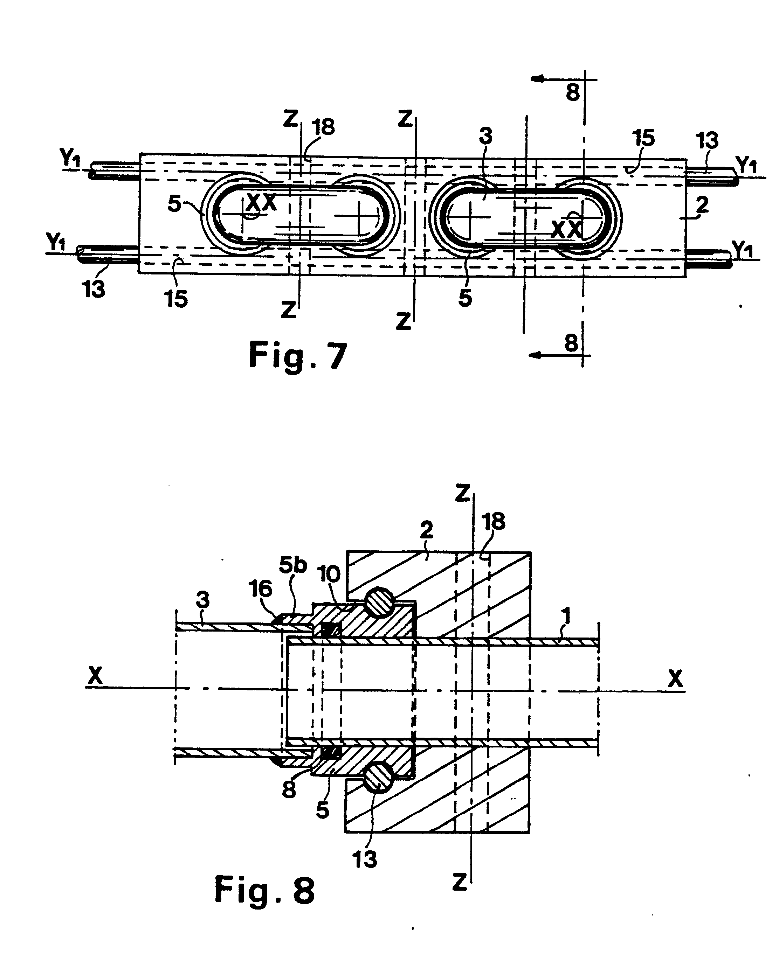

Si la compacité n'est pas un paramètre de premier rang, ou si l'on dispose de plus de hauteur pour une raison quelconque, on peut utiliser le principe de l'invention selon une variante d'exécution présentée aux Fig. 7 et 8.

Suivant la variante de la Fig. 7, la bride 2 avec des lamages 10 semblables à ceux décrits précédemment reçoit des perçages droits 15 d'axe Y1-Y1, parallèles au plan des axes XX des tubes 1 et orthogonaux aux axes XX de ceux-ci; les perçages 15 contiennent les chevilles 13 permettant de bloquer ou de verrouiller les collerettes 5 grâce à la gorge semi-circulaire 9 dont elles sont munies.

Le principe pour cette variante de la Fig. 7 est le même que pour la réalisation précédente, et la Fig. 8 permet d'en juger.

La Fig. 8 montre la collerette 5 raccordée à un coude 3 ou liaison hydraulique 3 par une brasure 16, ladite collerette étant placée dans le lamage 10 de la bride 2 et bloquée en position par les chevilles 13. L'étanchéité est assurée sur le tube 1 par le joint torique 8.

Le montage des liaisons hydrauliques ou coudes 3 et multicoudes 4 sur une batterie thermoélectrique, c'est-à-dire l'assemblage de l'invention s'effectue de la manière suivante:

La batterie de tubes 1 est assemblée par superposition de nappes A, B, de tubes 1 portant les échangeurs thermiques, alternant avec des couches de matériau thermoélectrique qui coopèrent avec les échangeurs. Le positionnement de cet empilage de tubes 1 et d'échangeurs en nappes A et B est assuré par des chevilles 17 enfoncées dans des perçages 18 d'axes ZZ orthogonaux aux axes XX des tubes 1 (Fig. 1, 6, 7 et 8) et son serrage par exemple par des moyens connus non décrits ici, consistant par exemple à fileter les extrémités des chevilles 17, à y visser des écrous et à faire jouer ainsi le rôle de tirants auxdites chevilles 17 qui ne font pas partie de l'assemblage de l'invention.

Parallèlement, on a préparé les liaisons hydrauliques (coudes 3 et multicoudes 4) en fixant aux extrémités d'un coude 3 ou d'un multicoude 4 d'entrée-sortie des fluides (Fig. 6) les collerettes 5 par brasure 16 réalisée au préalable, avant assemblage avec les brides 2. En d'autres termes, c'est un sous-ensemble coude 3 ou 4 plus deux collerettes 5 (à raison d'une collerette solidaire de chaque extrémité du coude 3 ou 4) que l'on va assembler avec un autre sous-ensemble comprenant deux tubes 1 et une bride 2 d'une même nappe A ou B ou bien deux tubes 1 appartenant à deux brides 2 de deux nappes A ou B différentes.

Dans une variante de réalisation de l'invention la brasure 16 peut être remplacée par un collage ou par un soudage. Cette opération de collage, de soudage ou de brasage est très avantageusement réalisée sur un montage qui assure avec précision la valeur de l'entraxe pour les coudes 3 ou les multicoudes 4.

Les collerettes 5 sont ensuite munies de leur joint d'étanchéité torique 8 placé dans la gorge intérieure 7 correspondante.

Dans la phase suivante, un coude 3 ou un multicoude 4 portant une collerette 5 à chaque extrémité dont l'embout 5b vient d'être ainsi soudobrasé ou collé en 16 est raccordé à deux extrémités de tubes 1 par emboîtement de chaque collerette 5 dans un lamage cylindrique 10 correspondant. Ce raccordement est aisé car l'ajustage est coulissant entre chaque collerette 5 et chaque lamage 10.

La dernière opération consiste à mettre en place les chevilles 13 qui assurent le blocage ou le verrouillage des collerettes 5 sur la bride 2. L'introduction des chevilles 13 dans les perçages droits 12 à travers les gorges circulaires 9 de chaque collerette 5 est facile car le profil semi-circulaire de chaque gorge 9 vient automatiquement se placer en correspondance avec le profil semi-circulaire à travers le lamage 10 de manière à former une section circulaire complète correspondant à celle de chaque cheville 13. Dans le cas de rainures parallèles 9a, le montage des chevilles 13 est également facile grâce à l'alignement des rainures 9a et des perçages droits 12.

Il en est de même dans le cas où les perçages droits 12 perpendiculaires au plan des axes XX sont remplacés par des perçages 15 qui sont parallèles au plan formé par les axes XX d'une même nappe A ou B (Fig. 7). Dans les deux cas, chaque collerette 5 se trouve emboîtée dans un lamage cylindrique 10 de la bride 2 et verrouillée mécaniquement sur la bride 2, dans le lamage 10, par une paire de chevilles droites et parallèles 13 traversant la bride 2 de part en part, et à moitié encastrées sur la périphérie de la collerette 5 qui est ainsi bloquée en translation et en rotation par rapport à la bride 2.

Les chevilles 13 peuvent éventuellement être bloquées sur les brides 2 par exemple par collage ou par des moyens mécaniques tels que des goupilles traversant les chevilles 13 elles-mêmes.

Chaque collerette 5 se trouve ainsi verrouillée ou prisonnière sur la bride 2 entre deux chevilles parallèles 13 en prise sur la gorge 9 ou 9a en deux emplacements diamétralement opposés. De plus, dans l'empilage ou la superposition de nappes A et B, une paire de chevilles 13 verticales verrouillent un certain nombre de collerettes 5 dont les axes XX sont dans un même plan vertical (Fig. 1 et 6). Ou bien, dans la variante de la Fig. 7, une paire de chevilles 13 horizontales verrouillent sur la bride 2 un certain nombre de collerettes 5 appartenant à une même nappe A ou B.

La présente invention permet donc de réaliser d'une manière simple les liaisons hydrauliques 3, 4 nécessaires pour constituer la batterie thermoélectrique que l'on désire monter. L'invention permet d'éviter la réalisation sur place de brasage des coudes 3 ou multicoudes 4 sur la bride 2, opération rendue délicate par le manque de place disponible sur les faces d'extrémités des brides 2 entre les tubes 1, sachant qu'il faut assurer l'étanchéité de tous les raccordements c'est-à-dire de toutes ces liaisons hydrauliques. L'étanchéité est parfaite grâce aux joints toriques 8 et aux brasures 16 qui sont prévus avant le rapprochement et l'assemblage des sous-ensembles collerettes 5 et coudes 3 ou multicoudes 4 avec les brides 2 de nappes A et B ce tubes 1.

Même dans le cas où l'on pourrait utiliser le collage, celui-ci resterait délicat, toujours pour des raisons de manque de place, si l'on n'utilisait pas l'assemblage mécanique de l'invention avec collerette 5, lamage 10, gorges 9 et 9a, perçages droits 12 ou 15 et chevilles 13.

Grâce à l'invention, le montage se réduit à la mise en place des sous-ensembles à collerettes 5 et à coudes 3 ou multicoudes 4 sur chaque bride 2 et au verrouillage de chaque sous-ensemble à l'aide des chevilles 13.

L'assemblage verrouillé de l'invention est étanche à une pression intérieure de fluide circulant dans les tubes 1, jusqu'à une valeur de 40 bars.

**Revendications**

1. Assemblage étanche entre un tube, un coude tubulaire et une bride métalliques pour une installation thermoélectrique du type comportant une pluralité de thermoéléments coopérant avec des échangeurs de chaleur disposés autour de tubes (1) en nappes (A, B) superposées, parcourues par des fluides alternativement chaud et froid et dont au moins un des fluides est un liquide qui est véhiculé par un conduit tubulaire (1) continu coopérant thermiquement avec les thermoéléments, lesdits conduits tubulaires ou tubes (1) étant assemblés en nappes (A, B) alternativement pour fluide chaud et pour fluide froid par des brides (2) près des extrémités desdits tubes (1) qui traversent les brides (2), cet assemblage étant caractérisé en ce que, entre chaque tube (1) et une bride métallique (2) est interposée une collerette métallique d'assemblage (5) avec un coude tubulaire (3, 4) de liaison avec un autre tube (1), ledit tube (1) étant emmanché de manière étanche dans la collerette (5) qu'il traverse au moins en partie, et dans l'extrémité dudit coude (3, 4) cependant que la collerette (5) emboîtée dans un lamage cylindrique (10) de la bride (2) est verrouillée mécaniquement sur la bride (2) dans le lamage (10) par une paire de chevilles droites et parallèles (13) traversant la bride (2) de part en part, et à moitié encastrées sur la périphérie de la collerette (5) qui est ainsi bloquée en translation par rapport à la bride (2).

2. Assemblage suivant la revendication 1, caractérisé en ce que chaque bride d'extrémité (2) comporte au moins une paire de perçages droits parallèles (12, 15) recevant une paire de chevilles droites parallèles (13) de verrouillage correspondant à une gorge ou rainures extérieures (9, 9a) de section semi-circulaire ménagée sur la périphérie de la collerette (5).

3. Assemblage suivant les revendications 1 et 2, caractérisé en ce que les chevilles (13) de verrouillage d'une collerette (5) sur une bride (2) sont perpendiculaires au plan formé par les axes (XX) des tubes (1) d'une même nappe (A ou B) et communes à plusieurs nappes (A, B) superposées en faisceau pour former la batterie thermoélectrique, afin de verrouiller toutes les collerettes (5) alignées verticalement.

4. Assemblage suivant les revendications 1 et 2, caractérisé en ce que les chevilles (13) de verrouillage d'une collerette (5) sur une bride (2) sont parallèles au plan formé par les axes (XX) des tubes (1) d'une même nappe (A ou B) et communes à toute la nappe (A ou B) pour verrouiller toutes les collerettes (5) alignées horizontalement, les chevilles (13) étant introduites dans des perçages droits (15) d'axe Y1-Y1 parallèle au plan des axes (XX).

5. Assemblage suivant les revendications 1 et 2, caractérisé en ce que la gorge semi-circulaire extérieure (9) d'une collerette (5) occupe toute la périphérie ou le pourtour circulaire de la collerette (5).

6. Assemblage suivant les revendications 1 et 2, caractérisé en ce que la gorge semi-circulaire extérieure dans laquelle est encastrée une cheville (13) de verrouillage, est une rainure droite (9a) et en ce qu'il y a sur chaque collerette (5) deux rainures droites parallèles (9a) diamétralement opposées, de section semi-circulaire correspondant à la section circulaire des perçages droits (12, 15) qu'elles complètent, et à la section circulaire des chevilles (13).

7. Assemblage suivant la revendication 6 caractérisé en ce que le blocage en translation et en rotation de la collerette (5) par rapport à la bride (2) est assuré par une paire de chevilles (13) de verrouillage traversant la bride (2) de part en part et à moitié encastrées dans les deux rainures droites parallèles (9a) ménagées à la périphérie de la collerette (5).

8. Assemblage suivant la revendication 1, caractérisé en ce que chaque collerette (5) comporte une gorge intérieure (7) de logement d'un joint d'étanchéité torique (8) comprimé radialement entre ladite collerette (5) et le tube (1) emmanché dans la collerette (5) et le traversant de part en part, cependant que l'extrémité d'un coude tubulaire (3, 4) dans laquelle est emmanchée l'extrémité d'un tube (1) est elle-même emmanchée dans un embout (5b) de la collerette (5) avec lequel elle est solidarisée par un moyen (16) choisi parmi la soudure, la brasure et le collage.

9. Assemblage suivant la revendication 1, caractérisé en ce que il comporte un sous-ensemble constitué par un coude tubulaire (3 ou 4) et deux collerettes (5) à raison d'une collerette (5) solidaire de chaque extrémité du coude (3 ou 4), et un sous-ensemble constitué par deux tubes (1) appartenant à une bride (2) à lamage (10) d'une même nappe (A ou B) ou à deux brides (2) de deux nappes (A).

10. Assemblage suivant la revendication 3 caractérisé en ce qu un coude tubulaire (4) de liaison hydraulique entre deux tubes (1) est un multicoude en S relié à ses extrémités à des tubes (1) appartenant à des brides (2) de nappes (A) différentes et contournant un tube (1) d'entrée-sortie ou un coude (3) d'une nappe intermédiaire (B).

**Patentansprüche**

1. Abgedichtete Verbindung zwischen einem Rohr, einem Rohrknie und einem metallischen Flansch für eine thermoelektrische Anlage mit einer Anzahl von Thermoelementen, welche mit Wärmeaustauschern zusammenwirken, die um Rohre (1) in übereinander angeordneten Lagen (A, B) angeordnet sind, welche von abwechselnd warmen und kalten Fluiden durchströmt werden, von denen mindestens eines der Fluide eine Flüssigkeit ist, die durch eine kontinuierliche Rohrleitung (1) transportiert wird, und thermisch mit den Thermoelementen zusammenwirkt, wobei die Rohrleitungen oder Rohre (1) abwechselnd in Lagen (A, B) für ein warmes und ein kaltes Fluid durch Flansche (2) nahe der Enden der Rohre (1) verbunden sind, welche die Flansche (2) durchqueren dadurch gekennzeichnet, daß zwischen jedem Rohr (1) und einem metallischen Flansch (2) ein metallischer Verbindungsbund (5) mit einem Rohrknie (3, 4) zur Verbindung mit einem anderen Rohr (1) angeordnet ist, daß das Rohr (1) in dichter Weise eingepaßt ist in den Bund (5), den es zumindest zum Teil durchdringt, und in das Ende des Rohrknies (3, 4), und daß der in einer zylinderförmigen Ausnehmung (10) des Flansches (2) aufgenommene Bund (5) mechanisch auf dem Flansch (2) in der Ausnehmung (10) durch ein Paar von geraden und parallelen Stiften (13) verriegelt ist, welche den Flansch (2) ganz durchdringen und zur Hälfte am Umfang des Bundes (5) eingelassen sind, so daß dieser translatorisch gegenüber dem Flansch (2) blockiert ist.

2. Verbindung nach Anspruch 1, dadurch gekennzeichnet, daß jeder Endflansch (2) mindestens ein Paar von geraden parallelen Bohrungen (12, 15) zur Aufnahme eines Paares von geraden parallelen Verriegelungsstiften (13) aufweist, die einer Nut oder äußeren Rinne (9, 9a) mit halbkreisförmigem Querschnitt entsprechen, die am Umfang des Bunds (5) ausgebildet sind.

3. Verbindung nach Anspruch 1 und 2, dadurch gekennzeichnet, daß die Verriegelungsstifte (13) eines Bundes (5) auf einem Flansch (2) senkrecht zu der durch die Achsen (XX) der Rohre (1) ein- und derselben Lage (A oder B) gebildeten Ebene und gemeinsam mit mehreren zu einem Bündel übereinander angeordneten Lagen (A, B) zur Bildung einer thermoelektrischen Batterie angeordnet sind, um sämtliche vertikal ausgerichteten Bunde (5) zu verriegeln.

4. Verbindung nach den Ansprüchen 1 und 2, dadurch gekennzeichnet, daß die Verriegelungsstifte (13) eines Bundes (5) auf einem Flansch (2) parallel zu der durch die Achsen (XX) der Rohre (1) von ein- und derselben Lage (A oder B) gebildeten Ebene und gemeinsam mit der ganzen Lage (A oder B) zur Verriegelung sämtlicher horizontal ausgerichteter Bunde (5) angeordnet sind und daß die Stifte (13) in gerade Bohrungen (15) der Achse (Y1-Y1) parallel zur Ebene der Achsen (XX) eingeführt sind.

5. Verbindung nach den Ansprüchen 1 und 2, dadurch gekennzeichnet, daß die äußere halbkreisförmige Nut (9) eines Bundes (5) sich über den gesamten kreisförmigen Umfang oder die kreisförmige Kontur des Bundes (5) erstreckt.

6. Verbindung nach den Ansprüchen 1 und 2, dadurch gekennzeichnet, daß die äußere halbkreisförmige Nut (9), in welcher ein Verriegelungsstift (13) eingebettet ist, durch eine geradlinige Rille (9a) gebildet ist und daß auf jedem Bund (5) zwei parallele geradlinige, diametral gegenüberliegend angeordnete Rillen (9a) mit halbkreisförmigem Querschnitt vorgesehen sind entsprechend dem kreisförmigen Querschnitt der geradlinigen Bohrungen (12, 15), die sie vervollständigen und dem kreisförmigen Querschnitt der Stifte (13).

7. Verbindung nach Anspruch 6, dadurch gekennzeichnet, daß die translatorische und rotatorische Sperre des Bundes (5) bezüglich des Flansches (2) durch ein Paar von Verriegelungsstiften (13) bewirkt ist, welche den Flansch (2) ganz durchdringen und zur Hälfte in die beiden geradlinigen parallelen Rillen (9a) eingebettet sind, die am Umfang des Bundes (5) ausgebildet sind.

8. Verbindung nach Anspruch 1, dadurch gekennzeichnet, daß jeder Bund (5) eine innere Nut (7) zur Aufnahme eines torischen Dichtringes (8) aufweist, der radial zwischen dem Bund (5) und dem in den Bund (5) eingepaßten und den Bund ganz durchdringenden Rohr (1) komprimiert ist und daß das Ende eines Rohrknies (3, 4), in welchem das Ende eines Rohres (1) eingepaßt ist, selbst in einem Ansatz (5b) des Bundes (5) eingepaßt ist, mit dem das Rohrknie mittels einer Befestigung (16) durch Schweißen, Löten oder Kleben verbunden ist.

9. Verbindung nach Anspruch 1, dadurch gekennzeichnet, daß die Verbindung eine durch ein Rohrknie (3 oder 4) und zwei Bunde (5) gebildete Untergruppe mit einem mit jedem Ende des Rohrknies (3 oder 4) verbundenen Bund (5) und eine durch zwei Rohre (1) mit einem Flansch (2) mit einer Ausnehmung (10) von ein- und derselben Lage (A oder B) oder mit zwei Flanschen (2) von zwei Lagen (A) gebildete Untergruppe gebildet ist.

10. Verbindung nach Anspruch 3, dadurch gekennzeichnet, daß ein Rohrknie (4) als hydraulische Verbindung zwischen zwei Rohren (1) durch ein mehrfach gebogenes S-Stück gebildet ist, welches mit seinen Enden mit Rohren (1) von Flanschen (2) von unterschiedlichen Lagen (A) verbunden ist und ein Eintritts/Austrittsrohr oder ein Rohrknie (3) einer Zwischenlage (B) umgibt.

## Claims

1. Tight coupling assembly between a tube, a tubular elbow and a metal end plate for a thermoelectric installation of the type comprising a plurality of thermoelements cooperating with heat exchangers arranged around tubes (1) in superimposed layers (A, B), through which alternately warm and cold fluids flow and whereof at least one of the fluids is a liquid flowing through a continuous tubular conduit (1) co-operating thermally with the thermoelements, the said tubular conduits or tubes (1) being assembled in layers (A, B) alternately for warm fluid and for cold fluid by end plates (2) close to the ends of the said tubes (1) which pass through the end plates (2), this coupling assembly being characterised in that interposed between each tube (1) and a metal end plate (2) is a metal coupling collar (5) with a tubular elbow (3, 4) for connection to another tube (1), the said tube (1) being fitted in a tight manner in the collar (5) which it passes through at least partly and in the end of the said elbow (3, 4), whereas the collar (5) fitted in a cylindrical countersunk recess (10) in the end plate (2) is locked mechanically on the end plate (2) in the countersunk recess (10) by a pair of straight, parallel pins (13) passing through the end plate (2) from one side to the other and half-countersunk on the periphery of the collar (5) which is thus prevented from moving by translation with respect to the end plate (2).

2. Coupling assembly according to Claim 1, characterised in that each end plate (2) comprises at least one pair of straight parallel bores (12, 15) receiving a pair of straight, parallel locking pins (13) corresponding to an external groove (9, 9a) of semi-circular cross-section provided on the periphery of the collar (5).

3. Coupling assembly according to Claims 1 and 2, characterised in that the locking pins (13) of a collar (5) on one end plate (2) are perpendicular to the plane formed by the axes (XX) of the tubes (1) of the same layer (A or B) and common to several layers (A, B) superimposed as a stack in order to form the thermoelectric battery, in order to lock all the vertically aligned collars (5).

4. Coupling assembly according to Claims 1 and 2, characterised in that the pins (13) for locking a collar (5) on an end plate (2) are parallel to the plane formed by the axes (XX) of the tubes (1) of the same layer (A or B) and common to the entire layer (A or B) in order to lock all the horizontally aligned collars (5), the pins (13) being introduced into straight bores (15) having axes Y1-Y1 parallel to the plane of the axes (XX).

5. Coupling assembly according to Claims 1 and 2, characterised in that the external semi-circular groove (9) of a collar (5) occupies the entire circumference or circular periphery of the collar (5).

6. Coupling assembly according to Claims 1 and 2, characterised in that the external semi-circular groove in which a locking pin (13) is received is a straight groove (9a) and in that there are on each collar (5) two diametrically opposed, parallel straight grooves (9a), of semi-circular section corresponding to the circular section of the straight bores (12, 15) which they complete and to the circular section of the pins (13).

7. Coupling assembly according to Claim 6, characterised in that preventing the movement by translation and rotation of the collar (5) with respect to the end plate (2) is ensured by a pair of locking pins (13) passing through the end plate (2) from one side to the other and half-countersunk in the two straight, parallel grooves (9a) provided on the periphery of the collar (5).

8. Coupling assembly according to Claim 1, characterised in that each collar (5) comprises an inner groove (7) for receiving an O-ring seal (8) which is radially compressed between the said collar (5) and the tube (1) fitted in the collar (5) and passing through it from one side to the other, whereas the end of a tubular elbow (3, 4) in which the end of a tube (1) is fitted is itself fitted in a sleeve portion (5b) of the collar (5) to which it is connected by means (16) chosen from welding, brazing and sticking.

9. Coupling assembly according to Claim 1, characterised in that it comprises a sub-assembly constituted by a tubular elbow (3 or 4) and two collars (5) there being one collar (5) connected to each end of the elbow (3 or 4) and a sub-assembly constituted by two tubes (1) belonging to an end plate (2) having a countersunk recess (10) of the same layer (A or B) or two end plates (2) of two layers (A).

10. Coupling assembly according to Claim 3, characterised in that a tubular elbow (4) for hydraulic connection between two tubes (1) is an S-shaped multi-elbow connected at its ends to tubes (1) belonging to end plates (2) of different layers (A) and skirting around an inlet/outlet tube (1) or an elbow (3) of an intermediate layer (B).

**Fig. 2**

**Fig. 1**

**Fig. 3**

**Fig. 4**

**Fig. 5**

Fig. 6

0173027

Fig. 7

Fig. 8